# EUROPÄISCHE PATENTSCHRIFT

(11) **EP 2 380 802 B1**
(45) Veröffentlichungstag und Bekanntmachung des Hinweises auf die Patenterteilung: **22.11.2017**
(21) Anmeldenummer: 11001555.9
(22) Anmeldetag: 25.02.2011
(51) Int. Cl.: B60Q 1/56, E05B 17/20, E05B 77/44, E05B 79/20, E05B 81/76, E05B 83/16, E05B 81/14

(54) **Laderaumklappe für Kraftfahrzeuge**
Trunk lid for motor vehicles
Porte du coffre de véhicule

(30) Priorität: 21.04.2010 DE 102010015676
(43) Veröffentlichungstag der Anmeldung: 26.10.2011
(73) Patentinhaber: Audi AG, 85045 Ingolstadt (DE)
(72) Erfinder: Lohr, Alexander, 93107 Thalmassing (DE)

(56) Entgegenhaltungen:
- EP-A1- 1 533 451
- DE-A1-102005 032 926
- US-A1- 2003 173 796

## Beschreibung

Die Erfindung betrifft eine Laderaumklappe, insbesondere eine Heckklappe für Kraftfahrzeuge gemäß dem Oberbegriff des Patentanspruches 1.

Unter Laderaumklappe bzw. insbesondere Heckklappe im Sinne der vorliegenden Erfindung sind sowohl Heckklappen für Fahrzeuge mit Stufenheck (Limousinen) als auch mit Steilheck (zum Beispiel Avant-Fahrzeuge) zu verstehen, die nach hinten und oben einen Kofferraum oder Laderaum abschließen. Bei der Konstruktion derartiger Klappen ist man bemüht, diese möglichst einbruchsicher zu gestalten. Durch die DE 100 62 137 A1 ist es zum Beispiel bekannt, an einer Ausnehmung für eine Leuchte in der Außenwand einer Heckklappe eine trichterförmige Schutzeinrichtung anzuordnen, die sich nach innen erweitert und die verhindern soll, dass nach Entfernen der Leuchte ein Manipulationswerkzeug einführbar ist, mittels dem das Heckklappenschloss entriegelt werden könnte.

Die EP 1 533 451 A1 betrifft einen Aufbau einer Laderaumklappe mit Klappenschloss, bei der im abgestuften Außenwandbereich der Laderaumklappe ein durch einen Schalter gebildeter Grifftaster vorgesehen ist. Dieser Schalter ist zusammen mit einer Leuchte in einem Kombinationsgehäuse angeordnet, das von hinten her auf den abgestuften Laderaumklappenbereich aufgebracht wird.

Weiter ist aus der DE 10 2005 032 926 A1 eine Schließanlage für einen Fahrzeug-Heckdeckel bekannt, bei der in einem Schlossraum eine Schutzabdeckung angeordnet ist, die das im Schlossraum aufgenommene Schloss an einer einer Innenverkleidung zugewandten Vorderseite und an einer von einem Schließteil abgewandten Innenseite abdeckt.

Weiter ist aus der US 2003/0173796 A1 eine Schlosseinrichtung in einer Heckklappe bekannt, die eine Innenwand und eine Außenwand aufweist, wobei im Bereich zwischen Außenwand und Innenwand eine Aufnahme für ein Handgriffelement ausgebildet ist, das innenwandseitig gelagert ist. Über einen Hebelmechanismus ist der Grifftaster mit einem Betätigungselement als Klappenschloss gekoppelt, wobei das in Hochachsenrichtung unter dem Griffelement liegende Betätigungselement innenwandseitig gelagert und abgestützt ist. Dem Schließzylinder, der neben dem Handgriffelement (in Fahrzeugquerrichtung gesehen) liegt und dem Betätigungselement sind spezielle Abdeckelemente zugeordnet, die vermeiden sollen, dass der Schließzylinder beziehungsweise das Betätigungselement einfach in den Innenraum gedrückt werden können.

Aufgabe der Erfindung ist es, eine Laderaumklappe für Kraftfahrzeuge vorzuschlagen, bei der mit baulich und fertigungstechnisch einfachen Mitteln ein verbesserter Einbruchschutz geschaffen ist.

Diese Aufgabe wird gelöst mit den Merkmalen des Patentanspruches 1. Vorteilhafte und besonders zweckmäßige Weiterbildungen der Erfindung sind Gegenstand der Unteransprüche.

Erfindungsgemäß wird vorgeschlagen, dass hinter (also der Innenwand zugewandt) dem Außenwandbereich der Laderaumklappe eine Abdeckplatte in zumindest eine Aussparung der Innenwand eingesetzt ist, die wenigstens eine Ausnehmung für einen Grifftaster sowie gegebenenfalls für Kennzeichenleuchten und/oder gegebenenfalls für eine Kennzeichenbefestigung derart überdeckt beziehungsweise abdeckt, dass ein Zugriff auf das darunter liegende und an der Innenwand angeordnete Klappenschloss und/oder dessen Betätigungsmittel unterbunden ist. Demgemäß ist eine einzige Abdeckplatte vorgesehen, die bei relativ einfacher Montage sämtliche relevanten Ausnehmungen in der Außenhaut der Laderaumklappe derart abschirmt, dass durch diese Ausnehmungen hindurch und durch die Innenwand bzw. das Innenblech kein Zugriff auf das Klappenschloss oder auf zum Klappenschloss führende Betätigungsmittel wie Seilzüge für eine Innenentriegelung, Notentriegelung, Entriegelungshebel, elektrische Leitungen, etc. möglich ist. Die Abdeckung verhindert wirksam das Einführen jeglicher Manipulationswerkzeuge in den Bereich des Klappenschlosses. Unter einer abzudeckenden Ausnehmung werden dabei vorliegend jede Art von Öffnungen verstanden. Erfindungsgemäß ist die Abdeckplatte zwischen den Außenwandbereich und eine mit Aussparungen versehene Innenwand der Laderaumklappe eingesetzt und zum Beispiel teils formschlüssig sowie teils durch Clipsverbindungen gehalten. Daraus resultiert eine sichere, robuste Halterung der Abdeckplatte bei einer einfachen Montage.

Zusätzlich kann die Abdeckplatte an einer an der Innenwand befestigten Innenverkleidung gegen den Außenwandbereich abgestützt sein, was praktisch ohne Mehraufwand den Festsitz der Abdeckplatte noch erhöht. Fertigungstechnisch besonders günstig kann die Abdeckplatte aus widerstandsfähigem, zum Beispiel vorzugsweise auch verstärktem Kunststoff hergestellt sein und einen beabstandet und etwa parallel zur Außenwand verlaufenden Boden und rahmenförmig sich zur Außenwand erstreckende Wände aufweisen, die im Wesentlichen an die Außenwand anschließen.

Des Weiteren können zwischen den rahmenförmigen Wänden die Abdeckplatte aussteifende Zwischenwände an den Boden angeformt sein, die sich im Wesentlichen ebenfalls bis zur Außenwand erstrecken. Damit unterteilt sich das Abdeckteil quasi in mehrere Kammern, die neben der aussteifenden Wirkung das Handling eines Manipulationswerkzeuges zusätzlich einengen.

An der Abdeckplatte können ferner ein oder mehrere, die Innenwand durchragende Abstellungen angeordnet sein, die sich an der Innenverkleidung der Laderaumklappe großflächig abstützen und eine kompakte, schwingungsresistente Konstruktion der gesamten Klappe (zum Beispiel betreffend Schließgeräusche) herstellen.

In besonders vorteilhafter Weise kann die Abdeckplatte in Fahrzeughochachsenrichtung gesehen an ihrer Unterseite formschlüssig zwischen der Außenwand und der Innenwand gehalten und an ihrer Oberseite mit der Innenwand verclipst sein. Neben einer besonders sicheren Halterung der Abdeckklappe resultiert daraus eine besonders einfache und schnelle Montage derselben. Es versteht sich, dass grundsätzlich auch eine kinematische Umkehrung in äquivalenter Weise verwendet werden kann, zum Beispiel ein oberseitiger Formschluss und eine unterseitige Verclipsung. Auch eine seitliche Anordnung ist selbstverständlich mit umfasst.

Weiter kann die Abdeckplatte im Vertikalschnitt betrachtet haubenförmig gestaltet sein und in Schrägstellung durch eine Aussparung der Innenwand hindurch einsetzbar sein, bis dessen unterer Bereich die Innenwand formschlüssig hintergreift, dann in die Endmontagestellung eingeschwenkt und am oberen Rand der Aussparung einclipsbar sein.

Schließlich kann die Clipsverbindung zwischen der Abdeckplatte und der Innenwand durch die an die Außenhaut herangeführten, rahmenförmigen Wände des Abdeckteils gegenüber den Ausnehmungen in der Außenwand verdeckt sein, wodurch ein gewaltsames Lösen oder Eindrücken der Abdeckplatte von Außen zuverlässig vermieden ist.

Ein Ausführungsbeispiel der Erfindung ist im Folgenden mit weiteren Einzelheiten näher erläutert. Die schematische Zeichnung zeigt in:
- Fig. 1: einen senkrechten Längsschnitt durch eine teilweise dargestellte Heckklappe für Kraftfahrzeuge mit einer hinter der Außenwand als Einbruchschutz eingesetzten Abdeckplatte,
- Fig. 2: eine Ansicht auf die Heckklappe gemäß Pfeil X der Fig. 1 mit in einem gestuften Außenwandbereich angeordneten Ausnehmungen für einen Grifftaster und für Kennzeichenleuchten,
- Fig. 3: eine Innenansicht auf die Heckklappe gemäß den Fig. 1 und 2 bei entfernter Innenverkleidung sowie montierter Abdeckplatte und Klappenschloss mit Betätigungsmitteln,
- Fig. 4: eine raumbildliche Darstellung der als Einbruchschutz dienenden Abdeckplatte in einer Ansicht von hinten, und
- Fig. 5: die Abdeckplatte gemäß Fig. 4 in einer der Innenverkleidung der Heckklappe zugewandten Ansicht.

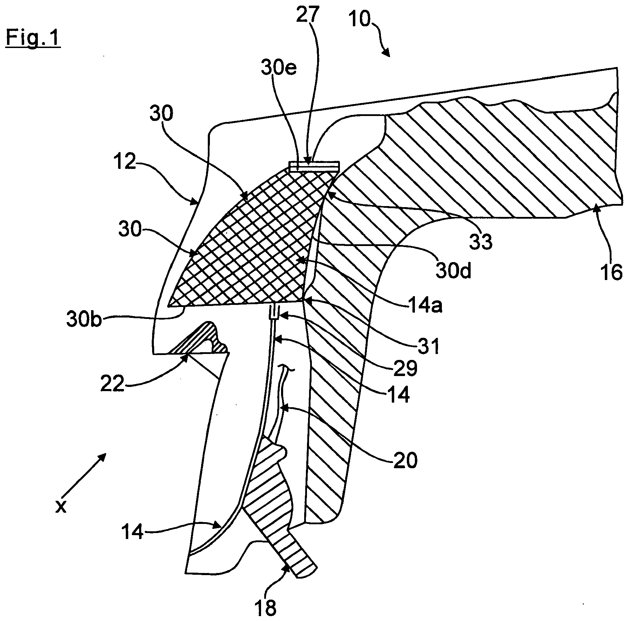

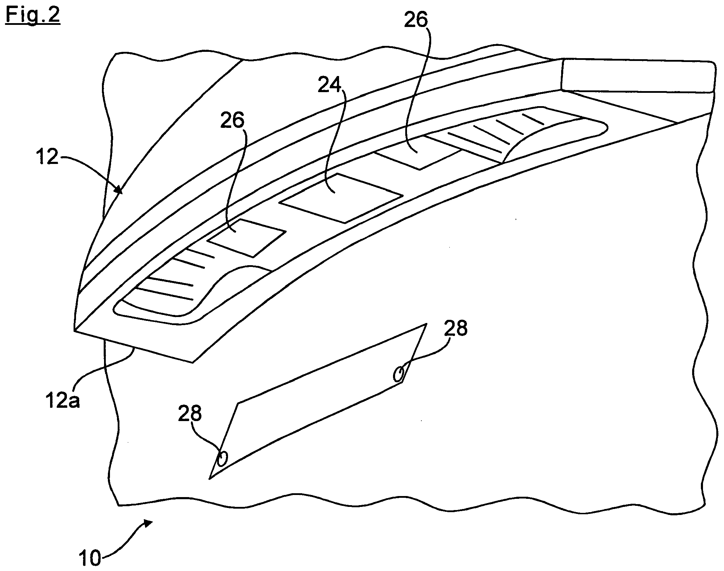

Die Fig. 1 und 2 zeigen teilweise eine Heckklappe 10 für ein Stufenheck-Kraftfahrzeug (Limousine) mit im Wesentlichen einer Außenwand 12, einem Innenblech 14 und einer Kunststoff-Innenverkleidung 16. Die schwenkbar angeordnete Heckklappe 10 deckt in bekannter Weise einen Kofferraum oder Laderaum des Kraftfahrzeuges nach oben und hinten ab.

Am Innenblech 14 ist im unteren Bereich ein Klappenschloss 18 befestigt, das über einen Bowdenzug 20 vom Fahrzeuginneren her (mechanische Notentriegelung) und über einen Grifftaster 22 von außerhalb der Heckklappe 10 elektrisch entriegelbar ist. Der entsprechende, elektrische Stellmotor (hier nicht dargestellt) ist am Klappenschloss 18 angeordnet. Das Klappenschloss 18 ist bekannter Bauart und deshalb nicht weiter beschrieben.

Die Außenwand 12 der Heckklappe 10 weist in deren etwa vertikal verlaufenden Strak einen gestuften Bereich (Fig. 2) auf, in dessen im Wesentlichen horizontal verlaufenden Abschnitt 12a eine mittlere erste Ausnehmung 24 für den Grifftaster 22 und zwei beiderseits daneben liegende Ausnehmungen 26 für nicht dargestellte Kennzeichenleuchten vorgesehen sind.

Unterhalb dieses Abschnittes 12a sind zwei Ausnehmungen 28 vorgesehen, die zur Befestigung eines Kennzeichenschildes dienen.

Zur Montage insbesondere des Grifftasters 22 und der Kennzeichenleuchten und zu deren elektrischem Anschluss an das Bordnetz des Kraftfahrzeuges ist in dem Innenblech 14 eine oberhalb des gestuften Bereiches 12a liegende Aussparung 14a vorgesehen.

Damit über die besagten Ausnehmungen 24, 26, 28 und durch die Aussparung 14a im Innenblech 14 kein Manipulationswerkzeug zum Beispiel in Form einer Sonde, etc. einführbar ist, mit dem auf den Bowdenzug 20, auf das Klappenschloss 18 mit gegebenenfalls einem Entriegelungshebel und/oder auf elektrische Zuführleitungen zugegriffen werden kann, ist in die Aussparung 14a eine Abdeckplatte 30 eingesetzt.

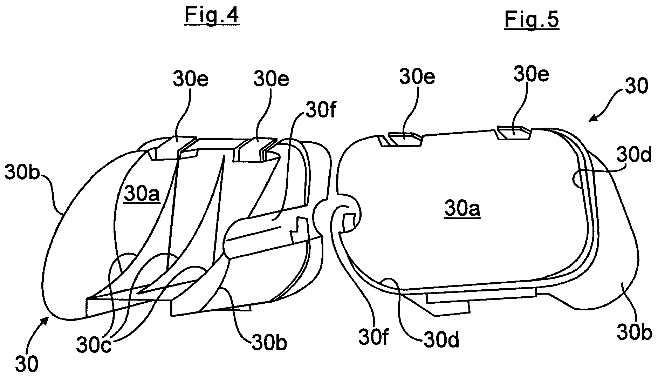

Die Abdeckplatte 30 aus widerstandsfähigem Kunststoff (vergleiche Fig. 4 und 5) weist einen flächigen Boden 30a und rahmenförmig diesen umschließende Wände 30b auf, die sich zur Außenwand 12 der Heckklappe 10 erstrecken und die insbesondere den gestuften Bereich 12a der Außenwand 12 überdecken (vergleiche Fig. 1).

Ferner sind an den Boden 30a der Abdeckplatte 30 mehrere Zwischenwände 30c angeformt, die mit Bezug zur gegenüberliegenden Außenwand 12 den von den Umfangswänden 30b umschlossenen Raum in mehrere Kammern unterteilen.

Des Weiteren sind an den Boden 30a zum Fahrzeuginnenraum (Kofferraum) ragende Abstellungen 30d angeformt, die sich durch die Aussparung 14a im Innenblech 14 hindurch erstrecken und an der an dem Innenblech 14 befestigten Innenverkleidung 16 abstützen.

Die Abdeckplatte 30 weist an ihrem oberen Randbereich zwei angeformte, federnde Rastzungen 30e auf, mittels denen sie am oberen Rand der Aussparung 14a einclipsbar ist und im montierten Zustand eine Clipsverbindung 27 ausbildet.

Zur Montage der haubenförmigen Abdeckplatte 30 (Fig. 1) wird diese bei entfernter Innenverkleidung 16 unter ca. 45 Grad Schrägstellung in die Aussparung 14a des Innenbleches 14 eingeführt, wobei deren unterer Randbereich die Aussparung 14a des Innenbleches 14 formschlüssig hintergreift, so dass der Abdeckplatten-Angriffsbereich am Innenblech 14 eingeschuht ist. Diese Einschuhung 29 ist in der Fig. 1 lediglich äußerst schematisch sowie lediglich symbolhaft dargestellt.

Sodann wird die Abdeckplatte 30 in die in Fig. 1 dargestellte Position geschwenkt, wobei sich die Stirnseiten der Wände 30b und der Zwischenwände 30c etwa parallel zu der Außenwand 12 der Heckklappe 10 ausrichten und die Wände 30b die besagten Ausnehmungen 24, 26, 28 nach oben abdecken.

Mittels der angeformten Rastzungen 30e wird die Abdeckplatte 30 schließlich mit dem Innenblech 14 formschlüssig verbunden bzw. verclipst (Clipsverbindung 27), wobei die Abstellungen 30d das Innenblech 14 durchragen und sich bei montierter Innenverkleidung 16 an dieser an definierten Abstützbereichen 31, 33 zusätzlich abstützen. Die Abstützbereiche 31, 33 sind hier lediglich beispielhaft dargestellt und können beliebig ausgebildet sein, insbesondere kann auch lediglich ein einziger definierter Abstützbereich vorgesehen sein.

Wie insbesondere aus der Fig. 1 ersichtlich ist, kann bei montierter Abdeckplatte 30 über die Ausnehmungen 24, 26, 28 kein Manipulationswerkzeug nach oben eingeführt und dann durch die Aussparung 14a im Innenblech 14 weiter nach unten zum Klappenschloss 18 geführt werden.

Ferner sind die an die Abdeckplatte 30 angeformten Rastzungen 30e bei montierter Abdeckplatte 30 über die Ausnehmungen 24, 26, 28 nicht zugänglich bzw. von den eine Abstellung ausbildenden umlaufenden Wänden 30b abgedeckt.

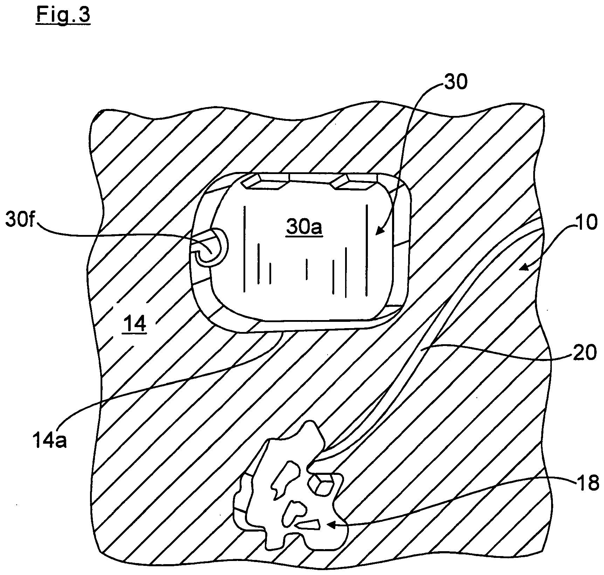

Um zum Beispiel eine Stromversorgung der Kennzeichenleuchten zu ermöglichen, ist an zum Beispiel einem Seitenwandbereich der Abdeckplatte 30 eine kanalartige Kabeldurchführung 30f vorgesehen, die stets so angeordnet bzw. ausgelegt ist, dass durch diese kein Manipulationswerkzeug durch diese hinter das Innenblech 14 eingebracht werden kann (Fig. 3 bis 5).

## Patentansprüche

1. Laderaumklappe für Kraftfahrzeuge, die einen Laderaum des Kraftfahrzeuges abschließt und die an einem Außenwandbereich einen Grifftaster zum Öffnen der Laderaumklappe aufweist, wobei der Grifftaster mit einem am unteren Randbereich der Laderaumklappe an deren Innenblech angeordneten Klappenschloss mechanisch oder elektrisch gesteuert zusammenwirkt, wobei hinter dem Außenwandbereich (12a) der Laderaumklappe (10) eine Abdeckplatte (30) angeordnet ist, die wenigstens eine Ausnehmung (24) für den Grifftaster (22) derart überdeckt, dass ein Zugriff auf das darunter liegende Klappenschloss (18) und/oder dessen Betätigungsmittel (20) unterbunden ist, **dadurch gekennzeichnet, dass** die Abdeckplatte (30) zwischen dem Außenwandbereich (12a) und dem zumindest eine Aussparung (14a) für die Festlegung der Abdeckplatte (30) aufweisenden Innenblech (14) der Laderaumklappe (10) angeordnet ist und wenigstens mit einem Teilbereich formschlüssig in der Aussparung (14a) gehalten ist.

2. Laderaumklappe nach Anspruch 1, **dadurch gekennzeichnet, dass** die Abdeckplatte (30) wenigstens mit einem Teilbereich durch eine Clipsverbindung (30e) an der Innenwand (14) im Bereich einer Aussparung (14a) in dem Innenblech (14) der Laderaumklappe (10) gehalten ist.

3. Laderaumklappe nach Anspruch 1 oder 2, **dadurch gekennzeichnet, dass** die Abdeckplatte (30) im montierten Zustand zusätzlich an einer an dem Innenblech (14) der Laderaumklappe (10) befestigten Innenverkleidung (16) abgestützt ist.

4. Laderaumklappe nach einem der vorhergehenden Ansprüche, **dadurch gekennzeichnet, dass** die Abdeckplatte (30) aus einem formstabilen und/oder widerstandsfähigem Kunststoff hergestellt ist und einen beabstandet und parallel zur Außenwand (12) verlaufenden Boden (30a) und rahmenförmig sich zur Außenwand (12) erstreckende Wände (30b) aufweist, die im montierten Zustand an die Außenwand (12) anschließen.

5. Laderaumklappe nach Anspruch 4, **dadurch gekennzeichnet, dass** zwischen den rahmenförmigen Wänden (30a) die Abdeckplatte (30) austeifende Zwischenwände (30c) an den Boden (30a) angeformt sind.

6. Laderaumklappe nach einem der Ansprüche 3 bis 5, **dadurch gekennzeichnet, dass** an der Abdeckplatte (30) ein oder mehrere, das Innenblech (14) der Laderaumklappe (10) durchragende Abstellungen (30d) angeordnet sind, die sich an der Innenverkleidung (16) der Laderaumklappe (10) flächig abstützen.

7. Laderaumklappe nach einem der vorhergehenden Ansprüche, **dadurch gekennzeichnet, dass** die Abdeckplatte (30) im montierten Zustand, in Hochachsenrichtung gesehen, an ihrer Unterseite formschlüssig zwischen der Außenwand (12) und dem Innenblech (14) der Laderaumklappe (10) gehalten und/oder eingeschuht und an ihrer Oberseite mit der Innenwand (14) verclipst ist.

8. Laderaumklappe nach Anspruch 7, **dadurch gekennzeichnet, dass** die Abdeckplatte (30) im Vertikalschnitt betrachtet haubenförmig gestaltet ist und in Schrägstellung durch eine Aussparung (14a) des Innenblech (14) der Laderaumklappe (10) einkippbar ist, bis deren unterer Bereich die Innenwand (14) formschlüssig hintergreift, dann in die Endmontagestellung einschwenkbar und am oberen Rand der Aussparung (14a) einclipsbar ist.

9. Laderaumklappe nach Anspruch 8, **dadurch gekennzeichnet, dass** die Clipsverbindung (27) zwischen der Abdeckplatte (30) und dem Innenblech (14) der Laderaumklappe (10) durch die an die Außenwand (12) herangeführten, rahmenförmigen Wände (30b) des Abdeckteils (30) gegenüber der wenigstens einen Ausnehmung (24, 26, 28) in der Außenwand (12, 12a) verdeckt sind.

10. Laderaumklappe nach einem der vorhergehenden Ansprüche, **dadurch gekennzeichnet, dass** zusätzlich zur wenigstens einen Ausnehmung (24) für den Grifftaster (22) Ausnehmungen (26, 28) für wenigstens eine Kennzeichenleuchte und/oder für die Kennzeichenbefestigung vorgesehen sind, die von der Abdeckplatte (30) überdeckt sind.

## Claims

1. Load compartment cover for motor vehicles which seals a load compartment of the motor vehicle and which comprises a handle button on an outer wall region for opening the load compartment cover wherein the handle button cooperates in a mechanically or electrically controlled manner with a cover lock arranged at the lower edge region of the load compartment cover on its inner panel wherein a cover plate (30) is arranged behind the outer wall region (12a) of the load compartment cover (10) which covers at least one recess (24) for the handle button (22) such that access to the cover lock (18) located thereunder and/or its actuation means (20) is prevented, **characterised in that** the cover plate (30) is arranged between the outer wall region (12a) and the inner panel (14) of the load compartment cover (10) comprising at least one groove (14a) for the fixing of the cover plate (30) and is held in the groove (14a) in a positive-locking manner at least with a partial region.

2. Load compartment cover according to claim 1, **characterised in that** the cover plate (30) is held in the region of a groove (14a) in the inner panel (14) of the load compartment cover (10) at least with a partial region by a clip connection (30e) on the inner wall (14).

3. Load compartment cover according to claim 1 or 2, **characterised in that** the cover plate (30) is also supported in the mounted state on an inner cladding (16) fastened to the inner panel (14) of the load compartment cover (10).

4. Load compartment cover according to any one of the preceding claims, **characterised in that** the cover plate (30) is manufactured from a dimensionally-stable and/or robust plastic and comprises a base (30a) running at a distance and parallel to the outer wall (12) and walls (30b) extending in frame-shape to the outer wall (12), said walls (30b) connect to the outer wall (12) in the mounted state.

5. Load compartment cover according to claim 4, **characterised in that** the intermediate walls (30c) reinforcing the cover plate (30) are formed on the base (30a) between the frame-shaped walls (30a).

6. Load compartment cover according to any one of claims 3 to 5, **characterised in that** one or a plurality of bent portions (30d) penetrating the inner panel (14) of the load compartment cover (10) are arranged on the cover plate (30) which are supported in a planar manner on the inner cladding (16) of the load compartment cover (10).

7. Load compartment cover according to any one of the preceding claims, **characterised in that** the cover plate (30) in the mounted state, viewed in the direction of the vertical axis, is held and/or slotted-in on its underside in a positive-locking manner between the outer wall (12) and the inner panel (14) of the load compartment cover (10) and is clipped on its upper side to the inner wall (14).

8. Load compartment cover according to claim 7, **characterised in that** the cover plate (30) has a hood shape when viewed in the vertical section and can be tipped into the inclined position by a groove (14a) of the inner panel (14) of the load compartment cover (10) until the inner wall (14) engages behind its lower region in a positive-locking manner, then it can be swivelled into the final mounting position and clipped on the upper edge of the groove (14a).

9. Load compartment cover according to claim 8, **characterised in that** the clip connection (27) is concealed between the cover plate (30) and the inner panel (14) of the load compartment cover (10) by the frame-shaped walls (30b) of the cover part (30) leading to the outer wall (12) with respect to the at least one recess (24, 26, 28) in the outer wall (12, 12a).

10. Load compartment cover according to any one of the preceding claims, **characterised in that** in addition to the at least one recess (24) for the handle button (22), recesses (26, 28) are provided for at least one licence plate light and/or for the licence plate fastening which are covered by the cover plate (30).

## Revendications

1. Porte de coffre pour véhicules automobiles, laquelle ferme un coffre du véhicule automobile et comporte au niveau d'une zone de paroi extérieure un bouton-poignée destiné à ouvrir la porte de coffre,
dans laquelle le bouton-poignée coopère par une commande mécanique ou électrique avec un verrou de porte agencé au niveau du bord inférieur de la porte de coffre et au niveau de sa tôle intérieure
et dans laquelle, derrière la zone de paroi extérieure (12a) de la porte de coffre (10), est agencée une plaque de couverture (30) qui recouvre au moins un évidement (24) pour le bouton-poignée (22) de telle sorte qu'un accès au verrou de porte (18) qui se trouve dessous et/ou à son moyen d'actionnement (20) est empêché,
**caractérisée en ce que** la plaque de couverture (30) est agencée entre la zone de paroi extérieure (12a) et la tôle intérieure (14), comportant au moins un évidement (14a) pour la fixation de la plaque de couverture (30), de la porte de coffre (10) et est maintenue au moins avec une zone partielle par concordance de forme dans l'évidement (14a).

2. Porte de coffre selon la revendication 1, **caractérisée en ce que** la plaque de couverture (30) est maintenue au moins avec une zone partielle par un assemblage clipsé (30e) au niveau de la paroi intérieure (14) dans la zone d'un évidement (14a) dans la tôle intérieure (14) de la porte de coffre (10).

3. Porte de coffre selon la revendication 1 ou 2, **caractérisée en ce que** la plaque de couverture (30) à l'état monté s'appuie en plus contre un habillage intérieur (16) fixé à la tôle intérieure (14) de la porte de coffre (10).

4. Porte de coffre selon l'une des revendications précédentes, **caractérisée en ce que** la plaque de couverture (30) est fabriquée à partir d'un plastique indéformable et résistant et comporte un fond (30a) qui s'étend à une certaine distance et parallèlement à la paroi extérieure (12) et des parois (30b) qui s'étendent en forme de cadre vers la paroi extérieure (12) et qui, à l'état monté, sont adjacentes à la paroi extérieure (12).

5. Porte de coffre selon la revendication 4, **caractérisée en ce que**, entre les parois en forme de cadre (30a), des parois intermédiaires (30c) rigidifiant la plaque de couverture (30) sont formées sur le fond (30a).

6. Porte de coffre selon l'une des revendications 3 à 5, **caractérisée en ce qu'**un ou plusieurs arrêts (30d) traversant la tôle intérieure (14) de la porte de coffre (10) sont agencés au niveau de la plaque de couverture (30) et s'appuient par leur surface à l'habillage intérieur (16) de la porte de coffre (10).

7. Porte de coffre selon l'une des revendications précédentes, **caractérisée en ce que** la plaque de couverture (30) est, à l'état monté, vue dans la direction de l'axe vertical, maintenue et/ou encastrée au niveau de son côté inférieur par concordance de forme entre la paroi extérieure (12) et la tôle intérieure (14) de la porte de coffre (10) et est clipsée au niveau de son côté supérieur avec la paroi intérieure (14).

8. Porte de coffre selon la revendication 7, **caractérisée en ce que** la plaque de couverture (30) est dessinée, vue en coupe verticale, en forme de capot et peut être basculée dans une position inclinée à travers un évidement (14a) de la tôle intérieure (14) de la porte de coffre (10) jusqu'à ce que sa zone inférieure passe par-derrière la paroi intérieure (14) par concordance de forme puis peut être pivotée dans la position de montage finale et clipsée au niveau du bord supérieur de l'évidement (14a).

9. Porte de coffre selon la revendication 8, **caractérisée en ce que** l'assemblage clipsé (27) entre la plaque de couverture (30) et la tôle intérieure (14) de la porte de coffre (10) est masqué par les parois en forme de cadre (30b), adjacentes à la paroi extérieure (12), de la pièce de couverture (30) par rapport à l'au moins un évidement (24, 26, 28) dans la paroi extérieure (12, 12a).

10. Porte de coffre selon l'une des revendications précédentes, **caractérisée en ce que**, en plus de l'au moins un évidement (24) pour le bouton-poignée (22), des évidements (26, 28) destinés à au moins un éclairage de plaque minéralogique et/ou à la fixation de plaque minéralogique sont prévus et sont recouverts par la plaque de couverture (30).
